# EUROPEAN PATENT APPLICATION

(11) **EP 4 624 149 A1**
(43) Date of publication of application: **01.10.2025**
(21) Application number: 25162139.7
(22) Date of filing: 06.03.2025
(51) Int. Cl.: B32B 15/08, B32B 15/12, B32B 15/20, B32B 27/08, B32B 27/10, B32B 29/00, B65D 5/74

(54) **A LAMINATED PACKAGING MATERIAL**

(30) Priority: 29.03.2024 IT 202400007075
(71) Applicant: Tetra Laval Holdings & Finance S.A., 1009 Pully (CH)
(72) Inventor: SHAHID, Nouraiz, 41123 Modena (IT); BJÖRUP, Niclas, 221 86 Lund (SE); HAKANSSON, Jonas, 221 86 Lund (SE); OHLSSON, Erling, 221 86 Lund (SE); ROBERTSSON, Dan, 221 86 Lund (SE)
(74) Representative: Tetra Pak Patent Attorneys

(57) **Abstract**

A laminated packaging material (16) for packaging of liquid food products is provided. The laminated packaging material comprises a bulk layer 20 provided with at least two slits (22) forming a partially cut opening and being arranged along a boundary of a closed shape defining the partially cut opening. The boundary of the closed shape comprises at least one hinge portion (42) and a bridge area (43) comprising at least one bridge portion (44) separating the at least two slits (22).

## Description

### Technical Field

The invention relates to a laminated packaging material for packaging of liquid food products. The invention further relates to a method of manufacturing a laminated packaging material, as well as to a packaging container.

### Background Art

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc., sold for long term ambient storage. The packaging material in this known packaging container is typically a laminate comprising a bulk or core layer of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, a form of barrier film, most commonly an aluminium foil, but other non-aluminium foil layers such as barrier films comprising polyesters may also be used.

On the inside of the laminate, i.e. the side intended to face the filled food contents of a container produced from the laminate, there is an innermost layer, applied onto the barrier film, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube forming, filling and sealing concept is that the web may be sterilised continuously just before tube-forming, thus providing for the possibility of an aseptic packaging method, i.e. a method wherein the liquid content to be filled as well as the packaging material itself are reduced from bacteria. The filled packaging container is produced under clean conditions such that it may be stored for a long time even at ambient temperature, without the risk of growth of microorganisms in the filled product. Another important advantage of the Tetra Brik^{®} -type packaging method is, as stated above, the possibility of continuous high speed packaging, which has considerable impact on cost efficiency.

Packaging containers can also be produced from sheet-like blanks or prefabricated blanks of a laminated packaging material. From a flat tubular blank a packaging container is produced by folding the blank to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

Commonly, liquid food packaging containers are provided with an opening feature used to allow a consumer to access to the content. The opening feature may e.g. be a straw hole, a pull tab, or a plastic cap added to the packaging container. For such opening features the packaging material of the packaging container is provided with some type of structure reducing the mechanical robustness locally.

For example, a hole may be provided by punching the bulk or core layer prior to lamination, and then cover the hole on the inside and outside by the additional lamination layers, including the barrier material. Such pre-laminated hole will greatly reduce the required penetration force, as the consumer does not have to create a hole in the bulk layer. However, it must be ensured that appropriate lamination is performed inside the hole.

For consumer satisfaction the penetration force should be as low as possible, however in order to prevent unintentional penetration some resistance of the opening structure is required. In modern packaging processes characterized by continuous and high-speed operations, ensuring the consistent and reliable sealing of straw holes and other opening structures to containers is paramount. This imperative arises from the necessity to prevent accidental rupturing while concurrently maintaining manufacturing quality and efficiency. There is thus a need for improved laminated packaging materials that both uphold the integrity of lamination and facilitate seamless integration within fast-paced packaging workflows.

### Summary

In a first aspect a laminated packaging material for packaging of liquid food products is provided. Said packaging material comprises a bulk layer provided with at least two slits forming a partially cut opening and arranged along a boundary of a closed shape defining the partially cut opening, the boundary of the closed shape comprises at least one hinge portion and a bridge area comprising at least one bridge portion separating the at least two slits. An improvement over previous solutions is provided in that the slits will allow for easy penetration of the packaging material, while the hinge portion and the bridge area will ensure that the bulk layer inside the boundary of the closed shape will remain in a flat configuration during manufacturing thereby ensuring lamination quality.

The bulk material layer may be intact along the boundary of the closed shape in the at least one hinge portion and the at least one bridge portion. This ensures robustness of the bulk layer at these portions.

The at least one hinge portion may be configured to fold into a packaging container when the partially closed opening is penetrated by a straw or other penetration device. This reduces the risk for material being entirely separated from the packaging material

The at least one bridge portion may be configured to break when the partially closed opening is penetrated by the straw or other penetration device. This ensures easy opening, as well as good control of the required penetration force. The bridge portion may be less than 1 mm, for instance 0.80 ±0.10 mm. Thus, the desired easy opening, as well as good control of the required penetration force may be obtained. This may also secure the packaging material during production as it will be explained later.

The at least one hinge portion may be longer than each of the at least one bridge portion. This effectively ensures the folding and breaking relationship between the hinge portion and the at least one bridge portion.

The bridge area may be arranged at an opposite side of the boundary of the closed shape of the partially cut opening compared to the hinge portion. This further ensures the original flat configuration of the bulk layer inside the boundary of the closed shape during lamination.

Preferably the bridge area is enclosed in an area extending on each side from an inward-going normal of the hinge portion by an angle of maximum 45°. More preferably the angle is less than 30°, preferably the angle is less than 10°. This also ensures the original flat configuration of the bulk layer inside the boundary of the closed shape during lamination.

The laminated packaging material may comprise a bulk layer of paper or paperboard or other cellulose-based material, a first outer liquid tight layer, arranged on an outside of the bulk layer, an inner liquid tight layer arranged on an inside of the bulk layer. A very robust and reliable packaging material is thereby provided.

The laminated packaging material may further comprise a barrier film or sheet laminated between the bulk layer and the inner liquid tight layer, wherein the barrier film or sheet is provided with at least two slits forming the partially cut opening, or wherein the barrier film or sheet layer is intact. This allows flexibility in the choice of barrier film or sheet material - when the barrier film or sheet material is easily penetrable, it may be left intact. On the other hand, when the barrier film or sheet material is difficult to penetrate it may be provided with the same slits as the bulk layer.

According to a second aspect, a method of manufacturing a laminated packaging material for packaging of liquid food products is provided. The method comprises providing a bulk layer; providing the bulk layer with at least two slits forming a partially cut opening, wherein the partially cut opening comprises a boundary of a closed shape, wherein the slits are arranged along the boundary of the closed shape, the boundary of the closed shape comprises at least one hinge portion and a bridge area comprising at least one bridge portion separating the at least two slits; applying an inner liquid tight layer on the inside of the bulk layer, and applying an outer liquid tight layer on the outside of the bulk layer.

Said method may further comprise feeding the bulk layer in a machine direction corresponding to a longitudinal direction of the packaging material, wherein an axis that runs through the center of the hinge portion and the center of the bridge area extends at least partially in the longitudinal direction of the packaging material. This ensures the original flat configuration of the bulk layer inside the boundary of the closed shape during lamination. In a possible embodiment, along the longitudinal direction, the hinge portion may be the first section of the partially cut opening to be rolled, or in other word, separated from a roller, forming a nip together with another roller, after lamination in the nip, for instance separated from a chill roller. The first section to be separated has the highest stress on the packaging material. Thus, the hinge portion may secure that the packaging material is separated from the roll without breaking. On the opposite side of the partially cut opening, a bridge portion may be the last section to be rolled, or in other word, separated from the roller after lamination in the nip, for instance separated from a chill roller. The last section to be separated has a lower stress compared to the first section. Thus, the bridge portion may sufficiently secure that the packaging material is separated from the roll without breaking.

The axis that runs through the center of the hinge portion and the center of the bridge area is preferably parallel with the longitudinal direction of the packaging material. This further ensures the original flat configuration of the bulk layer inside the boundary of the closed shape during lamination.

The method step of providing the bulk layer with at least two slits may be performed by laser cutting, and/or by mechanical cutting. A very fast, precise, and reliable manufacturing is thereby accomplished. In a possible embodiment, providing the bulk layer with at least two slits, cutting, may be only performed to cut of fibers, but not to remove any part of the bulk layer. For example, the distance between the cut fibers, in other words, the thickness of the slit, can be less than a millimeter, for instance less than 0.5 mm. Thus, the inner liquid tight layer and/or the outer liquid tight layer may be supported by the bulk layer as providing a relatively continues surface to be applied, in other words, a homogeneous surface to be applied. In relation to this continues surface and applied liquid tight layer(s) on that with a continues connection/support between the bulk layer and the liquid tight layer(s), physical integrity of the bulk layer and/or liquid tight layer(s) during and/or after opening of the opening can be maintained. This may be more important on the packaging material not having a barrier film or sheet laminated to the bulk layer. A packaging material without a barrier film or sheet may lack sufficient physical integrity during and/or after opening. The invention as explained above may provide sufficient integrity to the packaging material during and/or after opening, even if it doesn't comprise a barrier film or sheet.

According to a third aspect, a packaging container is provided. The packaging container comprises the laminated packaging material according to the first aspect and/or is manufactured by the method according to the second aspect.

The disclosed aspects, embodiments, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### Brief Description of the Drawings

Examples are described in more detail below with reference to the appended drawings.
Fig 1A is a schematic illustration of a method of manufacturing a laminated packaging material for packaging of liquid food products.
Fig 1B is a schematic illustration of a system for producing a packaging container for liquid food products.
Fig 2A is a cross-sectional chart of a method of manufacturing a laminated packaging material for packaging liquid food products.
Fig 2B is a cross-sectional chart of an alternative method of manufacturing a laminated packaging material for packaging liquid food products.
Fig 3 is a schematic side vide of a laminated packaging material being opened by a straw or other penetration device.
Fig 4A - 4C are schematic top views of different embodiments of a laminated packaging material by alternative variants of at least one hinge portion and at least one bridge portion.
Fig 5A - H are schematic top view of different embodiments of a laminated packaging material by alternative variants of at least one hinge portion and at least one bridge portion.

### Detailed Description

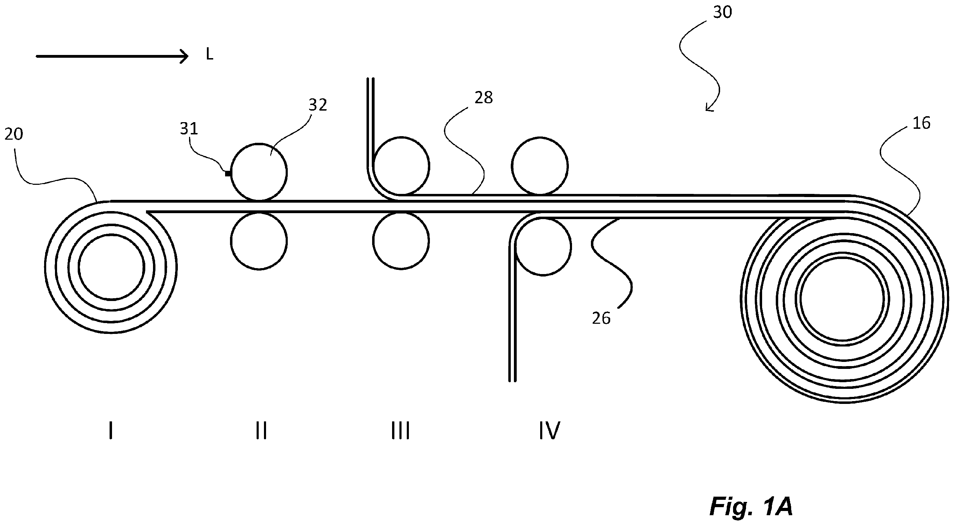

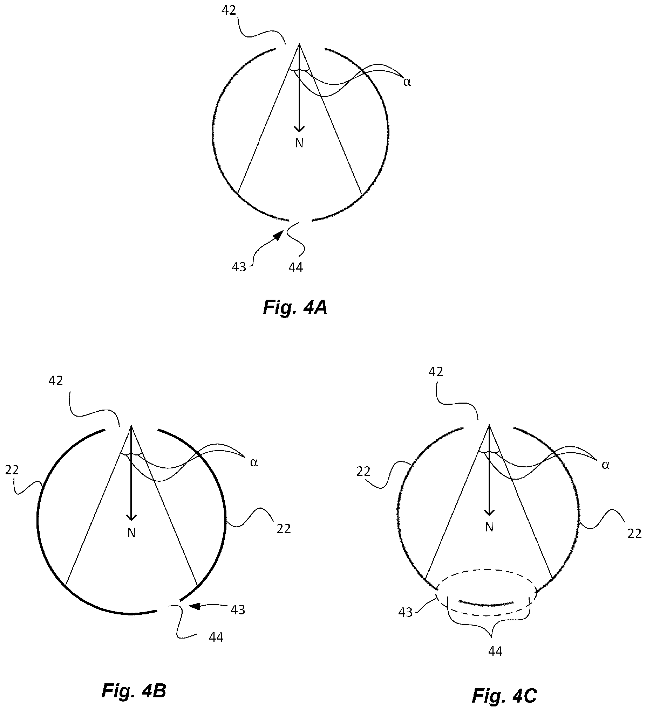

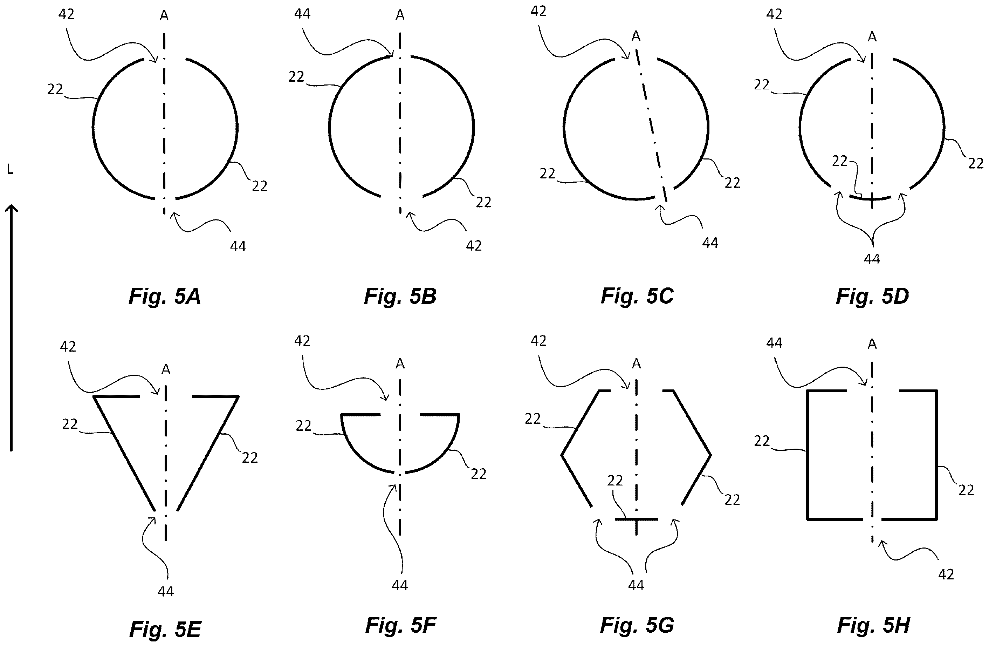

With reference to Fig. 1A an exemplary embodiment of a method for producing a laminated packaging material 16 is illustrated, using a converting system 30. The main task of the converting system 30 is to transform individual materials into a single packaging material product. The converting system 30 is preferably roll fed, at station I, with a bulk material layer 20 of paper or paperboard or other cellulose-based material. The converting system 30 is further configured to provide the bulk layer 20, at station II, with at least two slits 22 (see Figs. 4 and 5) forming a partially cut opening, wherein the partially cut opening comprises a boundary of a closed shape. The slits 22 may be provided using a punch tool 31 arranged on a roller 32. As will further be described with reference to Figs. 4 and 5, the slits 22 are arranged along the boundary of the closed shape, the boundary of the closed shape comprises at least one hinge portion 42 and at least one bridge area comprising at least one bridge portion 44 separating the at least two slits 22. The converting system 30 further comprises one or more lamination stations III and IV, configured to apply an inner liquid tight layer 28 on the inside of the bulk layer 20, and/or to apply an outer liquid tight layer 26 to the outside of the bulk layer 20.

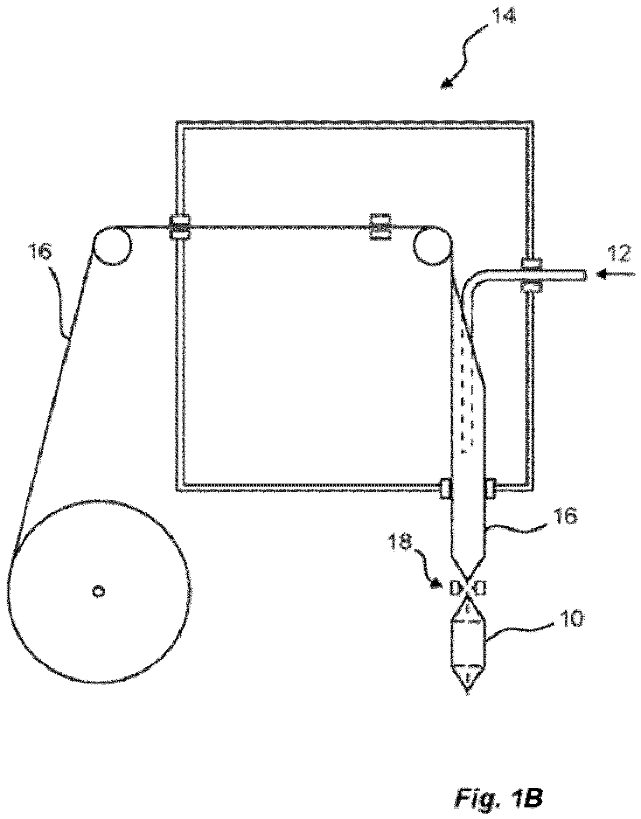

With reference to Fig. 1B an embodiment of a machine 14 for producing a filled packaging container 10 for a liquid food product 12 is illustrated. The machine 14 may be roll fed with a laminated packaging material 16. The packaging container 10 can exemplarily be made by forming the packaging material 16 to a tube, by filling the tube with a liquid food product 12, and then by cutting off and sealing the laminated packaging material 16 by a respective cutting and sealing means 18.

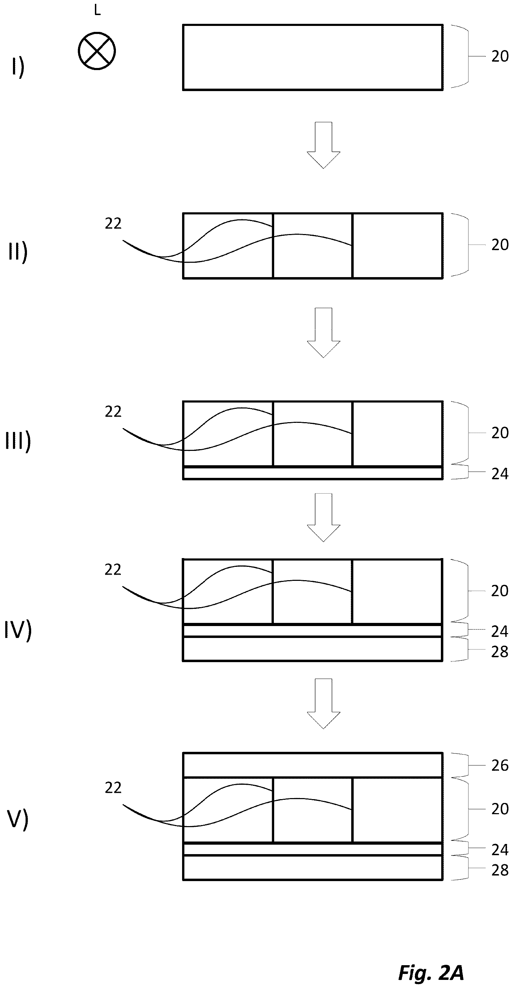

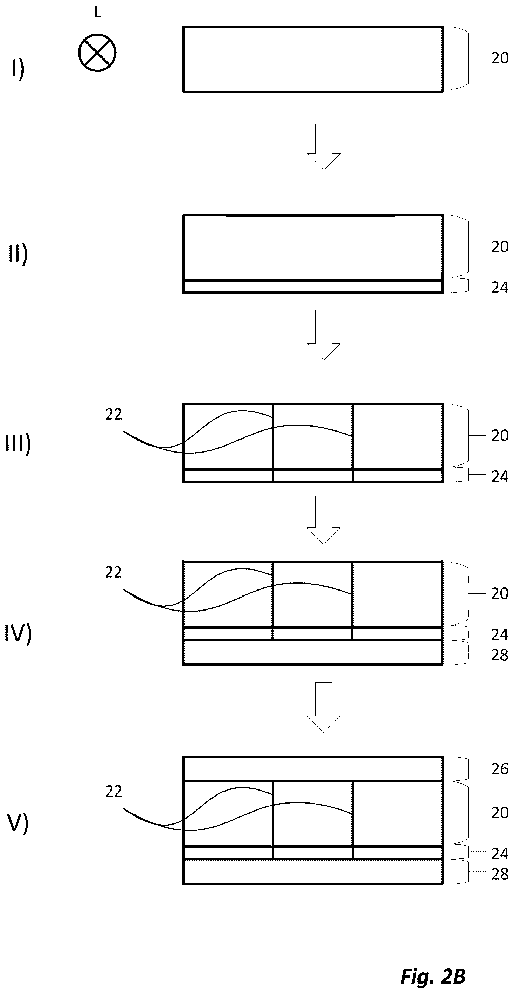

With reference to Fig. 1A and Figs. 2A-B the laminated packaging material 16 may also comprise a barrier film or sheet 24. This barrier film or sheet 24 may be laminated to an inside of the bulk layer 20 either after the bulk layer 20 is provided with the at least two slits 22 (see embodiment according to Fig. 2A) or before the bulk layer 20 is provided with the at least two slits 22 (see embodiment according to Fig. 2B). According to the embodiment in Fig. 2B the barrier film or sheet 24 may be provided with the at least two slits 22 simultaneously as the bulk layer 20, which results in the partially closed opening extending through both the bulk layer 20 and the barrier film or sheet 24. According to the embodiment in Fig. 2A the at least two slits 22 are provided to the bulk layer 20 before the barrier film or sheet is laminated to the inside of the bulk layer 20. In such embodiment the barrier film or sheet 24 may remain intact and together with the inner liquid tight layer 28 form an inner membrane containing and shielding the liquid food product 12 inside the packaging container 10.

The barrier film or sheet 24 may be an aluminum foil, alternatively the barrier film or sheet 24 may be an at least proportionately non-metal barrier film or sheet 24 and may completely comprise a non-metal material. The barrier film or sheet 24 may also be embodied as a composite material and therefore comprise more than one layer. In one particular example, the barrier film or sheet 24 may be a fibre based barrier film or sheet 24 (for instance a paper based barrier film or sheet 24). The fibre based barrier film or sheet 24 has a paper base layer, provided with a coating layer having barrier properties and coated to the paper base layer. The paper base layer may be coated with an aqueous dispersion coating method, with a dispersion or solution of a composition capable of providing barrier to oxygen gas, water vapour and/or further migratory substances. Examples of such compositions are aqueous compositions comprising vinyl alcohol polymers or starch or other polysaccharides, optionally further comprising a filler or a laminar mineral compound, such as talcum or bentonite or other clay minerals. Alternatively, or also, the paper substrate layer may be coated by a vapour deposition method, such as chemical vapor deposition and/or physical vapor deposition and may in a preferred embodiment be metalized, i.e. deposition-coated with a merely nano-meter thick coating of metal, such as aluminium. Depending on its thickness and mechanical properties, such fibre based barrier film or sheet 24 may be difficult to punch, cut or penetrate, thus requiring specific and powerful equipment. In one other particular example, the barrier film or sheet 24 may be a polymer based barrier film or sheet 24. The polymer based barrier film or sheet 24 may comprise a single polymer layer having inherent gas barrier properties; or a layer having a polymer base layer, with a coating layer having barrier properties and coated onto the polymer base layer. The polymer base layer may be pre-manufactured film, having a single or multilayer structure, which is further coated by deposition methods like chemical vapor deposition and/or physical vapor deposition in the same way as described above regarding the fibre based barrier substrate, e.g. such a polymer barrier substrate may be metalized and/or deposition coated with an inorganic oxide, such as with a metal oxide. Such polymer based barrier layers have also been seen to be difficult to punch or penetrate. These type of fibre based or polymer based barrier films or sheets 24 are seen to be beneficial especially on recycling cycle of the packages formed by the packaging materials 16.

The laminate material of the outer liquid tight layer 26 and an inner liquid tight layer 28 are preferably heat sealable thermoplastic layers.

The laminated packaging material can be manufactured by the method exemplary illustrated in Fig. 1A. The steps of two alternative embodiments of the inventive method are shown in Figs. 2A-B, the details of these embodiments will be explained below.

Referring to Fig. 2A it is illustrated that in a step I (also illustrated in step I of Fig. 1A), the bulk layer 20, which is preferably made of paper or paperboard or other cellulose-based material is provided.

In a step II (also illustrated in step II of Fig. 1A), the bulk layer 20 is provided with the at least two slits 22 to form the partially cut opening comprising the boundary of the closed shape, wherein the slits are arranged along the boundary of the closed shape, the boundary of the closed shape comprises the at least one hinge portion 42 and the at least one bridge area comprising the at least one bridge portion 44 separating the at least two slits 22.

In a step III the barrier film or sheet 24 may be laminated to said bulk layer 20 such that the barrier film or sheet 24 forms a membrane covering the at least two slits 22 of the partially cut opening.

In a step IV (also illustrated in step III of Fig. 1A), the inner liquid tight layer 28 is applied on the inside of the bulk layer 20 to be in direct contact with the filled food product 12.

In a step V (also illustrated in step IV of Fig. 1A) the outer liquid tight layer 26 is applied on the outside of the bulk layer 20 to constitute the outside of a packaging container 10 formed from the packaging material 16. This is done in a way that the outer liquid tight layer 26, the inner liquid tight layer 28, and the barrier film or sheet 24 together form the laminated membrane at the area of the partially cut opening.

Now referring to Fig. 2B it is illustrated that in a step I (also illustrated in step 1 of Fig. 1A), the bulk layer 20, which is preferably made of paper or paperboard or other cellulose-based material is provided.

In a step II the barrier film or sheet 24 may be laminated to said bulk layer 20.

In a step III (also illustrated in step II of Fig. 1A), the bulk layer 20 and barrier film or sheet 24 is provided with the at least two slits 22 to form the partially cut opening comprising the boundary of the closed shape, wherein the slits are arranged along the boundary of the closed shape, the boundary of the closed shape comprises the at least one hinge portion 42 and the at least one bridge area comprising the at least one bridge portion 44 separating the at least two slits 22.

In a step IV (also illustrated in step III of Fig. 1A), the inner liquid tight layer 28 is applied on the inside of the bulk layer 20 to be in direct contact with the filled food product 12.

In a step V (also illustrated in step IV of Fig. 1A) the outer liquid tight layer 26 is applied on the outside of the bulk layer 20 to constitute the outside of a packaging container 10 formed from the packaging material 16. This is done in a way that the outer liquid tight layer 26, the inner liquid tight layer 28, and the barrier film or sheet 24 together form the laminated membrane at the area of the partially cut opening.

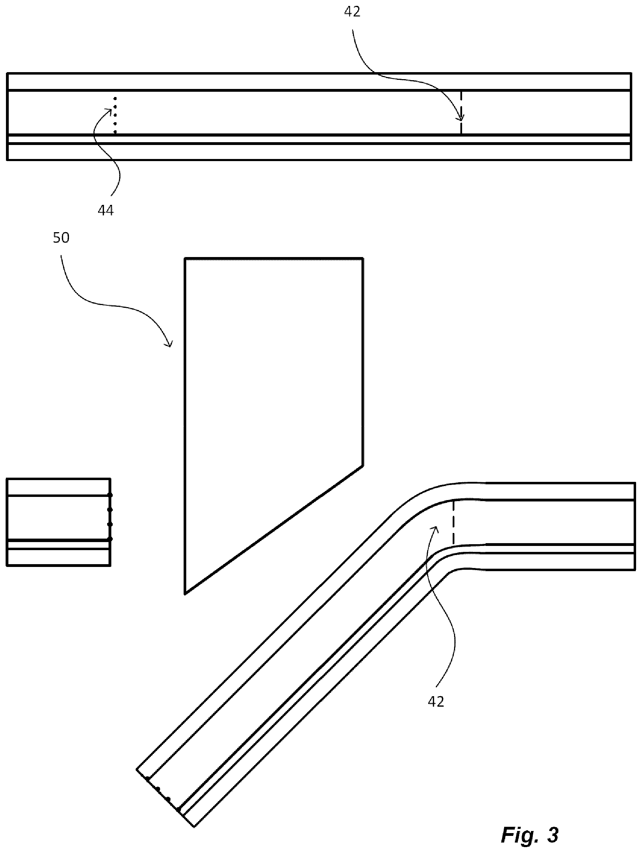

With reference to an embodiment shown in Fig. 3 an exemplary cross-section of the laminated packaging material 16 is illustrated before (see upper part of Fig. 3) and after/during penetration of the partially cut opening by a penetration device 50 (see bottom part of Fig. 3). The penetration device 50 may for example be a drinking straw. It should be noted that the dotted and dashed lines refer to the bulk material layer 20 of the bridge portion 44 and hinge portion 42 respectively, wherein the bulk layer is preferably intact.

When an external force is applied to the partially cut opening by a penetration device 50 the at least one bridge portion 44 is configured to break and the at least one hinge portion 42 is configured to fold into the packaging container 10. To make the bridge portion 44 more prone to break from a force that folds, but does not break off, the hinge portion 42, it is preferable that the hinge portion 42 is longer than the bridge portion 44. The bridge portion 44 may however be of equal or longer length than the hinge portion 42, then a first contact of the straw or other penetration device 50 to the bridge portion 44 may be arranged by a proper way, like informing and guiding the user of the straw and/or arranging the penetration route of the penetration device 50 properly. The folding rather than breaking of the hinge portion 42 when the partially cut opening is penetrated prevents a piece of the laminated packaging material 16 to fall into the liquid food product 12 once the packaging container 10 is opened by a user.

With reference to Fig. 4A-B a top view of the laminated packaging material 16 and the partially cut opening is illustrated. It is preferable that the bridge area 43 (in these embodiments comprising only one bridge portion 44) is enclosed in an area extending on each side from the inward-going normal N of the hinge portion 42 by an angle α of maximum 45°, more preferably the angle alpha is maximum 30° and even more preferably it is 10°. The arrangement of the hinge 42 and bridge portion 44 with respect to each other aids the part of the bulk layer 20 enclosed by the partially cut opening to remain flat and in level with the bulk layer 20 surrounding the partially cut opening. The at least two slits 22 may otherwise enable the part of the bulk layer 20 enclosed by the partially cut opening to bend somewhat downwards or upwards as compared to the surrounding bulk layer 20. Avoiding such deformations of the part of the bulk layer 20 enclosed by the partially cut opening may prevent air bubbles and/or folds of the barrier film or sheet 24 and/or the liquid tight layers 26,28 around the partially cut opening during manufacturing or use of the laminated packaging material.

The bulk material layer 20 may be intact along the boundary of the closed shape in the at least one hinge portion 42 and the at least one bridge portion 44. The intact material at these portions 42,44 enhance the robustness of the partially cut opening reducing the risk of accidental rupturing. Preferably these intact portions 42,44 are of such length that they do not increase the force needed to rupture the partially cut opening with a straw or other penetration device 50 beyond what consumers find satisfactory. Consumer surveys have revealed a desired penetration force of around 15 N or less, and a penetration force of around 10 to 12 N has proven to be satisfactory in terms of packaging container integrity and handling.

With reference to Fig. 4C a top view of the laminated packaging material 16 and the partially cut opening is illustrated. It is preferable that the bridge area 43 (in this embodiment comprising two bridge portions 44), is enclosed in an area extending on each side from the inward-going normal N of the hinge portion 42 by an angle α of maximum 45°, more preferably the angle alpha is maximum 30° and even more preferably it is 10°. The arrangement of the hinge 42 and bridge portions 44 with respect to each other aids the part of the bulk layer 20 enclosed by the partially cut opening to remain level with the bulk layer 20 surrounding the partially cut opening.

Now with reference to Fig. 5A-H, different embodiments of the laminated packaging material 16 will be described in further detail, with particular focus on preferred variants of the partially cut opening.

For this purpose, a manufacturing direction L is defined and illustrated in Figs. 1A, 2A-B and 5A-H. The machine direction L refers to the fact that the laminated packaging material 16 is normally manufactured in a continuous process that has a material feed direction, which is the machine direction L in other words. Based on that, a longitudinal direction L of the laminated packaging material 16 is achieved, which is parallel to the machine direction L. As well known, parallel direction vectors can be shifted relative each other as long as they are still pointing in the same direction. Based on that, there will be no further difference made in the following description between the machine direction L and the longitudinal direction L and the same reference sign L is used to underline their equivalence.

In the embodiment illustrated in Fig. 5A the closed shape is in the form of a circle. The two slits 22 separate one hinge portion 42 and one bridge portion 44. The hinge portion 42 is arranged ahead of the bridge portion 44 in the longitudinal direction L. The angle α is less than 30° in this embodiment and axis A is parallel with the longitudinal direction L.

In the embodiment illustrated in Fig. 5B the closed shape is in the form of a circle. The two slits 22 separate one hinge portion 42 and one bridge portion 44. The bridge portion 44 is arranged ahead of the hinge portion 42 in the longitudinal direction L. The angle α is less than 30° in this embodiment and axis A is parallel with the longitudinal direction L.

In the embodiment illustrated in Fig. 5C the closed shape is in the form of a circle. The two slits 22 separate one hinge portion 42 and one bridge portion 44. The hinge portion 42 is arranged ahead of the bridge portion 44 in the longitudinal direction L. The angle α is less than 30° in this embodiment and the axis A is partially in the direction of the longitudinal direction L.

In the embodiment illustrated in Fig. 5D the closed shape is in the form of a circle. The three slits 22 separate one hinge portion 42 and two bridge portions 44. The hinge portion 42 is arranged ahead of the bridge portions 44 in the longitudinal direction L. The angle α is less than 30° in this embodiment and the axis A is parallel with the longitudinal direction L.

In the embodiment illustrated in Fig. 5E the closed shape is in the form of a triangle/trapezoid. The two slits 22 separate one hinge portion 42 and one bridge portion 44. The hinge portion 42 is arranged ahead of the bridge portion 44 in the longitudinal direction L. The angle α is less than 30° in this embodiment and the axis A is parallel with the longitudinal direction L.

In the embodiment illustrated in Fig. 5F the closed shape is in the form of a half-circle. The two slits 22 separate one hinge portion 42 and one bridge portion 44. The hinge portion 42 is arranged ahead of the bridge portion 44 in the longitudinal direction L. The angle α is less than 30° in this embodiment and the axis A is parallel with the longitudinal direction L.

In the embodiment illustrated in Fig. 5G the closed shape is in the form of a hexagon. The three slits 22 separate one hinge portion 42 and two bridge portions 44. The hinge portion 42 is arranged ahead of the bridge portion 44 in the longitudinal direction L. The angle α is less than 30° in this embodiment and the axis A is parallel with the longitudinal direction L.

In the embodiment illustrated in Fig. 5H the closed shape is in the form of a square. The two slits 22 separate one hinge portion 42 and one bridge portion 44. The hinge portion 42 is arranged ahead of the bridge portion 44 in the longitudinal direction L. The angle α is less than 30° in this embodiment and the axis A is parallel with the longitudinal direction L.

The embodiments illustrated in Fig. 5A-H are examples only and are not to be considered a limitation to the scope of the invention. A person skilled in the art would realise that embodiments with more than three slits 22, one hinge portion 42 and two bridge portions 44 are possible and may be best suited to certain embodiments of the invention. A person skilled in the art would also be able to deduce that many other closed shapes could be used and orientation between the at least one hinge portion 42 and at least one bridge portion 44 could be manipulated.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A laminated packaging material (16) for packaging of liquid food products, comprising a bulk layer (20) provided with at least two slits (22) forming a partially cut opening and arranged along a boundary of a closed shape defining the partially cut opening, the boundary of the closed shape comprises at least one hinge portion (42) and a bridge area (43) comprising at least one bridge portion (44) separating the at least two slits (22).

2. The laminated packaging material (16) according to claim 1, wherein the bulk material layer (20) is intact along the boundary of the closed shape in the at least one hinge portion (42) and the at least one bridge portion (44).

3. The laminated packaging material (16) according to claim 1 or 2, wherein the at least one hinge portion (42) is configured to fold into a packaging container when the partially closed opening is penetrated by a straw or other penetration device.

4. The laminated packaging material (16) according to any of claims 1-3, wherein the at least one bridge portion (44) is configured to break when the partially closed opening is penetrated by the straw or other penetration device.

5. The laminated packaging material (16) according to any of claims 1-4, wherein the at least one hinge portion (42) is longer than each of the at least one bridge portion (44).

6. The laminated packaging material (16) according to any of claims 1-5, wherein the bridge area (43) is at an opposite side of the boundary of the closed shape of the partially cut opening compared to the hinge portion (42).

7. The laminated packaging material (16) according to any of the preceding claims, wherein the bridge area (43) is enclosed in an area extending on each side from an inward-going normal (N) of the hinge portion (42) by an angle (α) of maximum 45°.

8. The laminated packaging material (16) according to claim 7, wherein the angle (α) is less than 30°, preferably the angle (α) is less than 10°.

9. The laminated packaging material (16) according to any of the preceding claims, which comprises a bulk layer (20) of paper or paperboard or other cellulose-based material, an outer liquid tight layer (26), arranged on an outside of the bulk layer (20), an inner liquid tight layer (28) arranged on an inside of the bulk layer (20).

10. The laminated packaging material (16) according to any of the preceding claims, wherein the laminated material (16) further comprises a barrier film or sheet (24) laminated between the bulk layer (20) and the inner liquid tight layer (28), wherein the barrier film or sheet is provided with at least two slits (22) forming the partially cut opening or, wherein the barrier film or sheet layer (24) is intact.

11. A method of manufacturing a laminated packaging material (16) for packaging of liquid food products, comprising:
a. providing the bulk layer (20)
b. providing the bulk layer with at least two slits (22) forming a partially cut opening, wherein the partially cut opening comprises a boundary of a closed shape, wherein the at least two slits (22) are arranged along the boundary of the closed shape, the boundary of the closed shape comprises the at least one hinge portion (42) and the bridge area (43) comprising the at least one bridge portion (44) separating the at least two slits (22).
c. applying the inner liquid tight layer (28) on the inside of the bulk layer (20), and
d. applying the outer liquid tight layer (26) on the outside of the bulk layer (20).

12. The method according to claim 11, further comprising feeding the bulk layer (20) in a machine direction (L) corresponding to a longitudinal direction (L) of the laminated packaging material (16), and wherein an axis (A) that runs through the center of the hinge portion (42) and the center of the bridge area (43) extends at least partially in the longitudinal direction (L) of the packaging material (16).

13. The method according to claim 12, wherein the axis (A) that runs through the center of the hinge portion (42) and the center of the bridge area (43) is parallel with the longitudinal direction (L) of the laminated packaging material (16).

14. The method according to any of claims 11 to 13, wherein the step of providing the bulk layer (20) with at least two slits (22) is performed by laser cutting, and/or by mechanical cutting.

15. A packaging container (10), comprising a laminated packaging material (16) according to any of claims 1 to 10 and/or manufactured in a method according to any of claims 11 to 14.
